# EUROPEAN PATENT APPLICATION

(11) **EP 4 787 586 A1**
(43) Date of publication of application: **05.08.2026**
(21) Application number: 25155285.7
(22) Date of filing: 31.01.2025
(51) Int. Cl.: H01M 50/342, H01M 50/30

(54) **FILTER DEVICE AND HOUSING OF BATTERY WITH FILTER DEVICE**

(71) Applicant: MANN+HUMMEL GmbH, 71636 Ludwigsburg (DE)
(72) Inventor: ZBIRAL, Robert, 71636 Ludwigsburg (DE); EVLEKLI, Coskun, 71636 Ludwigsburg (DE)
(74) Representative: Mann + Hummel Intellectual Property

(57) **Abstract**

A filter device (200) for filtering a fluid stream of a housing (60) of a battery, in particular of a traction battery of a motor vehicle, comprises a cover element (100) comprising a base section (110) and a top section (150), that comprise a fluid passage (22) for venting, the cover element (100) further comprising an open end (112) at a free end (114) of the base section (110) and a closed end (156) at a free end (158) of the top section (150), and the base section (110) being connected to the top section (150). The filter device (200) further comprises a filter arrangement (130) arranged inside the cover element (100), in particular inside the top section (150), and a pressure relief valve (160) arranged in an intended fluid flow direction (20) downstream of the filter arrangement (130). The filter arrangement (130) comprises a filter element (132) and a particle separator (134) that are hollow, in particular round, the particle separator (134) being arranged upstream of the filter element (132) in the intended fluid flow direction (20).

## Description

### Technical Field

Embodiments relate to a filter device for filtering a fluid stream of a housing of a battery, in particular of a traction battery of a motor vehicle, as well as a housing of a battery, in particular of a traction battery of a motor vehicle, with a filter device.

### Background Art

Battery electric storage systems used as stationary systems or as traction batteries for vehicles contain a certain number of battery cells.

In the event of a malfunction hot gases and particles may escape from the battery cells.

To protect people from dangerous fumes and gases that may occur during thermal runaway of at least one battery cell, venting must be possible, in order to drain the gas to the environment. Further, also in case of cell malfunction, the rechargeable battery requires a housing of the battery that is mechanically strong and sealed against the environment. However, it is required to implement an opening in the battery module housing for the purpose of venting, which means safe drainage of gases to the environment.

Further, to prevent the housing of the battery and sealings used in the housing from damage due to increased pressure, for example as a result of gas development or temperature changes, breathing must be enabled. This means, gas needs to be drained safely from the housing of the battery, if increased pressure occurs. Further, during normal function of the cells, the opening has to be protected against intrusion of obstacles, humidity and the like. This, except humidity, is normally achieved by filter elements, such as membranes.

WO 2019/151627 A1 describes a venting device for a housing of a battery, comprising at least a first connection element with a first fluid guiding portion and a first thread element for connecting the venting device with the housing of the battery, a first sealing element, and a first filter element arranged in the first fluid guiding portion. The venting device is adapted to be sealed against the housing of the battery by the first sealing element, if the first connection element is screwed together with the housing of the battery.

CN 218901206 U describes a flue gas filter device with an anti-explosion valve. The flue gas filter device comprises a filter cylinder and a filter screen assembly. The filter cylinder is of a hollow cavity structure with openings in the two ends. The filter cylinder is provided with a flue gas filter channel, and the flue gas filter channel linearly extends along the axis of the filter cylinder. The filter screen assembly is accommodated in the hollow cavity of the filter cylinder and shields the flue gas filter channel.

Thus, state of the art is a tight sealed housing of the battery with a pressure equalization element to compensate pressure differences during normal operating conditions. If overpressure occurs due to a malfunction, it has to be reduced in the most effective way possible, i.e. by burst discs, reversible and irreversible opening pressure relief valves.

### Summary

It is an object of the embodiments to provide an improved filter device for filtering a fluid stream of a housing of a battery, in particular of a traction battery of a motor vehicle.

Another object is to provide a housing of a battery, in particular of a traction battery of a motor vehicle, with a filter device.

According to an aspect of the embodiments the object is achieved by a filter device for filtering a fluid stream of a housing of a battery, in particular of a traction battery of a motor vehicle, the filter device comprising a cover element comprising a base section and a top section that comprise a fluid passage for venting, the cover element further comprising an open end at a free end of the base section and a closed end at a free end of the top section, and the base section being connected to the top section. The filter device further comprises a filter arrangement arranged inside the cover element, in particular inside the top section, and a pressure relief valve arranged in an intended fluid flow direction downstream of the filter arrangement. The filter arrangement comprises a filter element and a particle separator that are hollow, in particular round, the particle separator being arranged upstream of the filter element in the intended fluid flow direction.

According to a further aspect of the embodiments the another object is achieved by a housing of a battery, in particular of a traction battery of a motor vehicle, the housing comprising the filter device, and at least one first opening. The open end of the cover element of the filter device is mounted in a substantially fluid tight manner to the at least one first opening.

Advantageous embodiments are described in the dependent claims, the description and the drawings.

The proposed filter device for filtering gases and particles comprises a filter arrangement and a tight closed outlet, wherein the outlet is tightly sealed with a pressure relief valve with a spring, according to the state of the art, a deflectable cap or a corresponding burst disc that opens or deflects at a defined pressure if an overpressure occurs due to a malfunction inside the housing of the battery. The opening system can be monitored by electronic devices and/or sensors.

The cover element provides a housing for the filter arrangement and the pressure relief valve.

The filter arrangement comprises a filter element that can be a hollow, in particular round filter, which is designed to be gas-tight on its interfaces, so that when the filter device is open, the gas must flow through the filter element. Advantageously, the filter element may be a folded medium. Furthermore, the filter element can be stabilized against the exhausting gas by means of a corresponding support element. A round filter element can also be equipped with a central tube.

The main function of the filter element is to capture fine thereby harmful and hazardous particles and/or gases caused by a malfunction of at least one battery cell inside the housing of the battery. So the fine dust depth filter serves to effectively prevent this and keep the fine particles inside the filter element and thus in the interior of a housing of the battery. Due to the high temperatures of the fluid stream, which may be equal to or greater than 200°C, the filter element itself is made of an adequate heat resistance material, as glass, metal, ceramics, or a combination of these materials. The filter medium can have a single-layer structure or a multi-layer structure. It can be a plane element or can be pleated to enlarge the surface. In order to fulfil its function, it may be present in a sufficiently gas-permeable form as fibers, nonwoven materials, fabrics, needle mats, foams, porous or microporous structures. Advantageously, a pollution of the environment after malfunction of at least one battery cell of the battery electric storage system may be avoided.

The filter element is protected by an upstream coarse particle separator as a further part of the filter arrangement. The particle separator is configured with a separation screen arranged across the fluid passage through the base body, wherein screen openings of the separation screen engage across the fluid passage. The separation screen advantageously serves for preventing particles to enter the fluid passage. Thus, an undamaged condition of the filter element may be prolonged, mainly during a thermal runaway event of at least one battery cell.

The inlet of the top section with the filter element is equipped with a fixable and sealable interface for connection to the base section as a gas leading component or directly to the sealed housing. With the help of the gas leading component, for example a pipe elbow, the direction of the gas flowing out in the event of a malfunction inside the housing can be precisely determined. The filter device comprising the top section with the filter element and the base section as the gas leading component can provide fixing, damping and sealing elements for easy and tight mounting on the sealed housing.

After the pressure relief valve of the filter device actuated by the spring has opened by overpressure, it will be closed again, according to a pressure difference between the housing and the outside. The pressure relief valve represented by the deflectable cap or the burst disc remains in a condition that is no longer tight at the flow outlet even after the overpressure has been reduced. This means that this process is irreversible and therefore not repeatable.

According to a favorable embodiment of the filter device, the top section is replaceable as a self-contained unit after an event in which the closed end is opened while the base section is useable.

The cover element may be configured to accommodate a seat for a circumferential extending sealing element of the filter device.

According to a favorable embodiment of the filter device, the filter element and the particle separator may be shaped as hollow cylinders respectively comprising closed downstream ends. The particle separator may be arranged inside the filter element, the closed downstream ends being directed to the closed end of the top section. The filter element may comprise a gas tight end cap at the closed end. Advantageously, the fluid stream venting from the housing of the battery enters the interior of the particle separator, where larger particles are separated from the fluid stream. The rest of the fluid stream then is filtered by the filter element and leaves the filter element in radial direction to the outside of the filter element. For leaving the filter device the fluid streams along the outer side of the filter element to the pressure relief valve where the fluid is released to the environment when the pressure relief valve is open.

According to a favorable embodiment of the filter device, the top section may comprise a fluid inlet in an axial direction, and the particle separator may be arranged across the fluid inlet and through the top section. The particle separator comprises a separation screen and advantageously serves for preventing particles to enter the fluid passage. Screen openings of the particle separator may engage across the fluid inlet. Thus, an undamaged condition of the filter element may be prolonged, mainly during a thermal runaway event of at least one battery cell.

According to a favorable embodiment of the filter device, the base section may be a fluid guiding component configured to lead the fluid stream from the housing to the top section. The base section may comprise a bending contour providing a fluid deflection angle of 90°. With the help of the gas leading component, for example a pipe elbow, the direction of the gas flowing out in the event of a malfunction inside the housing can be precisely determined. The filter device comprising the top section with the filter element and the base section as the gas leading component can provide fixing, damping and sealing elements for easy and tight mounting on the sealed housing. Space-saving mounting of the filter device alongside the housing of the battery is enabled.

According to a favorable embodiment of the filter device, the top section may comprise a fluid outlet. The pressure relief valve may be mounted at the fluid outlet and may be configured to open the fluid passage in the intended fluid flow direction when a predetermined excess pressure in the housing is reached or exceeded. In particular, the pressure relief valve may be sealed against the top section by a circumferential sealing element.

According to a favorable embodiment of the filter device, the pressure relief valve may comprise a deflectable cap comprising a fixation element interacting with a fixation counter element of the fluid outlet so that the deflectable cap is arranged at the fluid outlet, the deflectable cap being sealed against the fluid outlet by a circumferential sealing element. The deflectable cap may be detachable from the fluid outlet when the predetermined excess pressure in the housing is reached or exceeded. Thus, the filtered fluid stream may exit to the environment without any harmful particles.

According to a favorable embodiment of the filter device, the pressure relief valve may comprise a burst disc configured to open the fluid passage when the predetermined excess pressure in the housing is reached or exceeded. Alternatively, the pressure relief valve may remain connected to the filter device instead of being deflected. For this purpose, the burst disc may be equipped with breaking point lines which break open when a predetermined pressure of the venting fluid is exceeded.

According to a favorable embodiment of the filter device, the filter arrangement further comprises a central tube arranged inside the filter element and between the particle separator and the filter element. Additionally or alternatively, the filter arrangement further comprises a support contour arranged on an outside of the filter element. Thus, the filter element may be stabilized against the fluid pressure by the support contour. The central tube further may enable the mounting of the filter element due to the fixation of the filter medium bellows to the central tube.

According to a favorable embodiment of the filter device, the base section may comprise a circumferential rim that is a seat for a sealing element to be arranged circumferentially between the circumferential rim and the housing in an intended mounting state of the filter device. By this way, the base body may be mounted to an opening of a housing in a substantially fluid tight manner providing a fluid permeable fluid passage for venting.

The proposed housing of a battery comprises a filter device for filtering gases and particles comprises a filter arrangement and a tight closed outlet, wherein the outlet is tightly sealed with a pressure relief valve with a spring, according to the state of the art, a deflectable cap or a corresponding burst disc that opens or deflects at a defined pressure if an overpressure occurs due to a malfunction inside the housing of the battery. The opening system can be monitored by electronic devices and/or sensors.

The filter arrangement comprises a filter element that can be a hollow, in particular round filter, which is designed to be gas-tight on its interfaces, so that when the filter device is open, the gas must flow through the filter element. Advantageously, the filter element may be a folded medium. Furthermore, the filter element can be stabilized against the exhausting gas by means of a corresponding support element. A round filter element can also be equipped with a central tube.

The main function of the filter element is to capture fine thereby harmful and hazardous particles and/or gases caused by a malfunction of at least one battery cell inside the housing of the battery. So the fine dust depth filter serves to effectively prevent this and keep the fine particles inside the filter element and thus in the interior of a housing of the battery. Due to the high temperatures of the fluid stream, which may be equal to or greater than 200°C, the filter element itself is made of an adequate heat resistance material, as glass, metal, ceramics, or a combination of these materials. The filter medium can have a single-layer structure or a multi-layer structure. It can be a plane element or can be pleated to enlarge the surface. In order to fulfil its function, it may be present in a sufficiently gas-permeable form as fibers, nonwoven materials, fabrics, needle mats, foams, porous or microporous structures. Advantageously, a pollution of the environment after malfunction of at least one battery cell of the battery electric storage system may be avoided.

The filter element is protected by an upstream coarse particle separator as a further part of the filter arrangement. The particle separator is configured with a separation screen arranged across the fluid passage through the base body, wherein screen openings of the separation screen engage across the fluid passage. The separation screen advantageously serves for preventing particles to enter the fluid passage. Thus, an undamaged condition of the filter element may be prolonged, mainly during a thermal runaway event of at least one battery cell.

The inlet of the top section with the filter element is equipped with a fixable and sealable interface for connection to the base section as a gas leading component or directly to the sealed housing. With the help of the gas leading component, for example a pipe elbow, the direction of the gas flowing out in the event of a malfunction inside the housing can be precisely determined. The filter device comprising the top section with the filter element and the base section as the gas leading component can provide fixing, damping and sealing elements for easy and tight mounting on the sealed housing.

After the pressure relief valve of the filter device actuated by the spring has opened by overpressure, it will be closed again, according to the pressure difference between the housing and the outside. The pressure relief valve opened by the deflectable cap or by bursting of the burst-disc remains in a condition that is no longer tight at the flow outlet even after the overpressure has been reduced. This means that this process is irreversible and therefore not repeatable.

According to a favorable embodiment of the housing, a base section of the cover element may be attached to an outside of the housing, and the top section of the cover element may be arranged parallel to a wall of the housing. Thus, there is no extra space needed inside the housing of the battery for the components of the filter device.

According to a favorable embodiment, the housing may further comprise a second opening. An overpressure valve may be arranged at the second opening and may be configured to open at a higher pressure level than the pressure relief valve of the cover element to provide a bypass fluid flow path from an interior of the housing to an environment, the bypass fluid flow path bypassing at least the filter arrangement. Thus, in an advantageous embodiment the sealed housing of the battery may be furthermore equipped with a state of the art overpressure valve as bypass if the filter device is blocked.

According to a favorable embodiment, the housing may further comprise at least one third opening, and a pressure compensation element may be arranged at the at least one third opening. In particular, the housing may further comprise at least two third openings, and one pressure compensation element may be arranged at each of the at least two third openings. Thus, in an advantageous embodiment the sealed housing of the battery may be furthermore equipped with state of the art pressure compensation elements for pressure compensation during normal operation.

### Brief Description of Drawings

The embodiments together with the above-mentioned and other objects and advantages may best be understood from the following detailed description of the embodiments, but not restricted to the embodiments.
Fig. 1 shows a part of a housing of a battery, in particular of a traction battery of a motor vehicle, with a filter device for filtering a fluid stream, according to embodiments, in an isometric view from an outer side.
Fig. 2 shows the housing with the filter device according to Fig. 1 in a top view with sectional planes A-A and B-B indicated.
Fig. 3 is a sectional view of the housing with the filter device according to sectional plane A-A in Fig. 2 with sectional plane C-C and with details X2 and Y2 of the filter device indicated.
Fig. 4 is a sectional view of the housing with the filter device according to sectional plane B-B in Fig. 2.
Fig. 5 is a sectional view of the housing with the pressure compensation element according to sectional plane C-C in Fig. 3.
Fig. 6 shows the detail Y2 of the filter device according to Fig. 3.
Fig. 7 shows the detail X2 of the filter device according to Fig. 3.
Fig. 8 shows a filter device according to further embodiments, in an isometric view.
Fig. 9 is a sectional view of the filter device according to Fig. 8 with details A and X1 of the filter device indicated.
Fig. 10 shows the detail A of the filter device according to Fig. 9.
Fig. 11 shows the detail X1 of the filter device according to Fig. 9.

### Description of Embodiments

In the drawings, like elements are referred to with equal reference numerals. The drawings are merely schematic representations, not intended to portray specific parameters of the embodiments. Moreover, the drawings are intended to depict only typical embodiments and therefore should not be considered as limiting the scope of the embodiments.

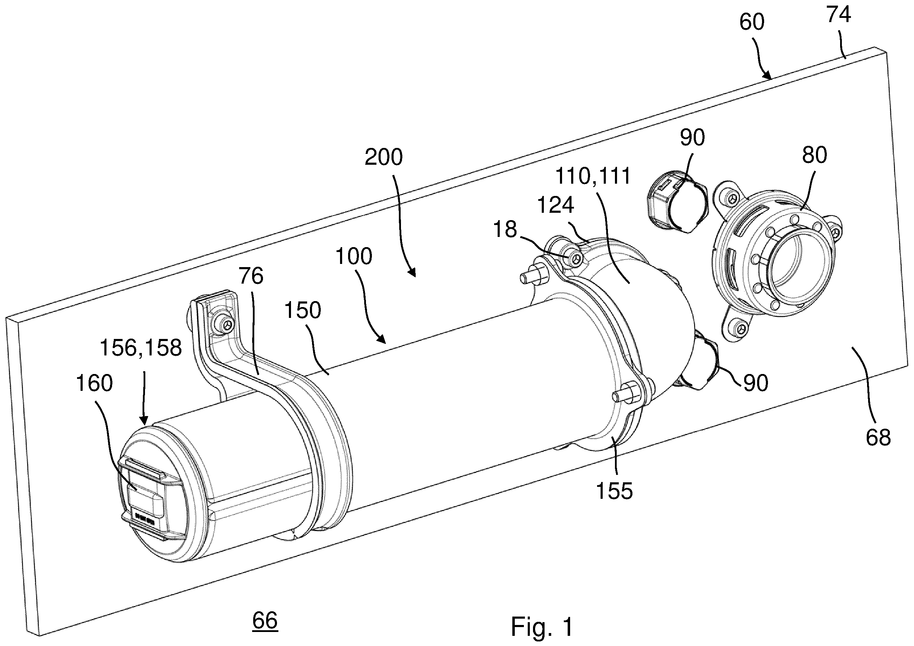

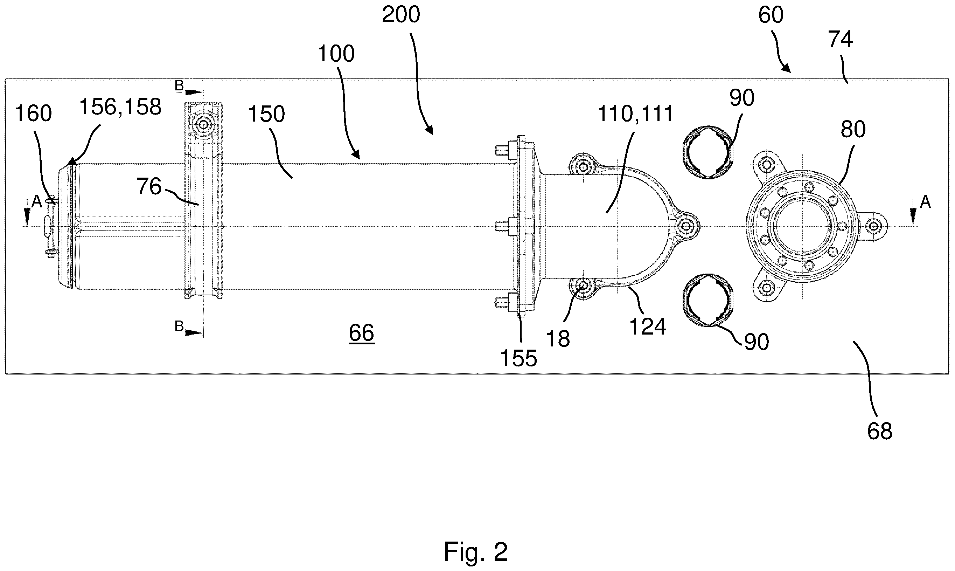

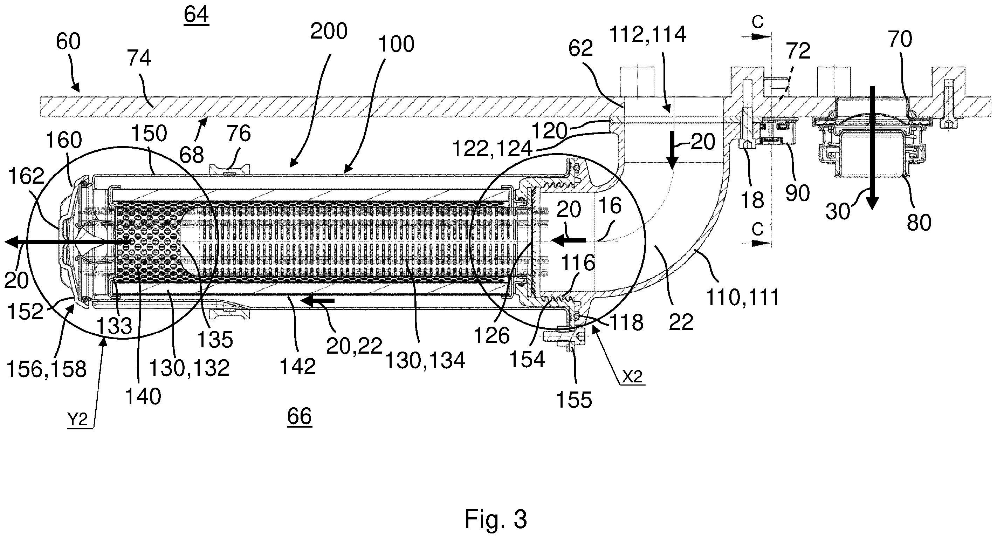

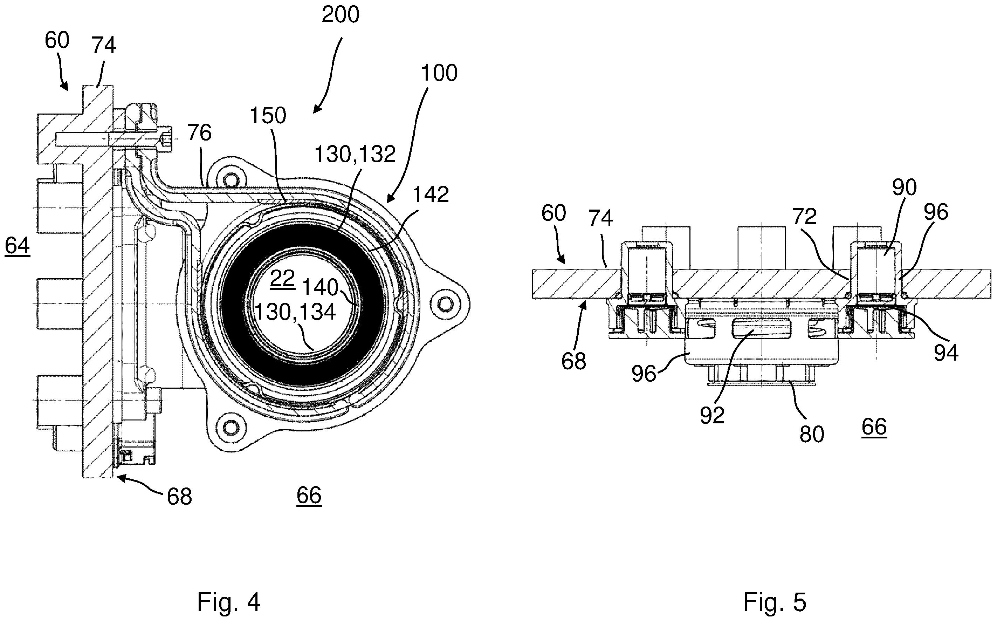

Fig. 1 depicts a part of a housing 60 of a battery, in particular of a traction battery of a motor vehicle, with a filter device 200 for filtering a fluid stream, according to embodiments, in an isometric view from an outer side 68, whereas in Fig. 2 the housing 60 with the filter device 200 according to Fig. 1 is depicted in a top view with sectional planes A-A and B-B indicated. Fig. 3 depicts a sectional view of the housing 60 with the filter device 200 according to sectional plane A-A in Fig. 2 with sectional plane C-C and with details X2 and Y2 of the filter device 200 indicated, whereas Fig. 4 depicts a sectional view of the housing 60 with the filter device 200 according to sectional plane B-B in Fig. 2.

Only part of a wall of the housing 60 of the battery is shown. The housing 60 has at least one first opening 62 (to be seen in Fig. 3) for release of a fluid stream from inside the housing 60.

The filter device 200 comprises a cover element 100 with a base section 110 and a top section 150, having a fluid permeable fluid passage 22 for venting.

The cover element 100 has an open end 112 at a free end 114 of the base section 110 and a closed end 156 at a free end 158 of the top section 150.

The base section 110 is connected to the top section 150, in particular by threads 116, 154, and a circumferential sealing element 118.

The base section 110 of the cover element 100 is mounted with the open end 112 in a substantially fluid tight manner to the first opening 62 on an outside 68 of the housing 60, thus having a fluid permeable fluid passage 22 for venting.

In an alternative embodiment, not shown, the top section 150 may be directly connected to the housing 60 of the battery.

The top section 150 has a fluid inlet 126 in axial direction 16, including the particle separator 134 arranged across the fluid inlet 126 through the top section 150.

As may be seen from Fig. 3, the cover element 100 comprises a filter arrangement 130 being arranged inside the cover element 100, in particular inside the top section 150. The filter arrangement 130 comprises a hollow, in particular round, filter element 132 and a hollow, in particular round, particle separator 134. The particle separator 134 is arranged upstream of the filter element 132 in the intended fluid flow direction 20.

The filter element 132 and the particle separator 134 are shaped as hollow cylinders with closed downstream ends 133, 135. The particle separator 134 is arranged inside the filter element 132, the closed ends 133, 135 of the filter element 132 and the particle separator 134 directed to the closed end 156 of the top section 150.

The filter element 132 and the particle separator 134 are arranged in the top section 150 along an axial direction 16.

The filter element 132 has a gas tight end cap 138 at the closed end 133.

A central tube 140 is arranged inside the filter element 132, in particular between the particle separator 134 and the filter element 132. A support contour 142 is arranged on an outside of the filter element 132.

Fig. 3 depicts the fluid flow direction 20 with arrows.

The top section 150 of the cover element 100 comprises a pressure relief valve 160 being arranged in an intended fluid flow direction 20 downstream of the filter arrangement 130.

The top section 150 has a fluid outlet 152, and a pressure relief valve 160 is mounted at the fluid outlet 152. The pressure relief valve 160 is configured to open the fluid passage 22 in the intended fluid flow direction 20 when a predetermined excess pressure in the housing 60 is reached or exceeded.

The base section 110 is configured as a fluid guiding component 111 leading the fluid from the housing 60 of the battery to the top section 150 of the cover element 100. In the embodiment shown, the base section 110 is configured with a bending contour, in particular with a bending contour providing a fluid deflection angle of 90°. By this way, the top section 150 of the cover element 100 may be arranged parallel to a wall 74 of the housing 60.

The filter device 200 is fixed to the housing 60 of the battery with the base section 110 by a number of mounting elements 18, e.g. opening for screwing bolts. The top section 150 further is fixed to the wall 74 of the housing 60 with an additional fixation element 76.

The base section 110 has a circumferential rim 124 which is a seat 122 for a sealing element 120 to be arranged circumferentially between the rim 124 of the base section 110 and the housing 60 of the battery in its intended mounting state.

The housing 60 further comprises a second opening 70, where an overpressure valve 80 is arranged. The overpressure valve 80 is configured to open at a higher pressure level than the pressure relief valve 160 of the cover element 100 and provides a bypass fluid flow path 30 from an interior 64 of the housing 60 to an environment 66. The bypass fluid flow path 30 bypasses at least the filter arrangement 130.

Further, the housing 60 comprises two third openings 72, where pressure compensation elements 90 are arranged.

In Fig. 4 the concentric arrangement of the hollow round particle separator 134 inside the hollow round filter element 132 is to be seen. The central tube 140 and the support contour 142 stabilize the filter element, which may be made from a folded filter medium.

The top section 150 of the filter device 200 is fixed to the wall 74 of the housing 60 by the fixation element 76 mounted on the outside 68 of the housing 60.

Fig. 5 depicts a sectional view of the housing 60 with the pressure compensation element 90 according to sectional plane C-C in Fig. 3.

The pressure compensation element 90 comprises an element body 96 with a membrane 94.

The overpressure valve 80 is tightly closed by a spring element 92 against a predefined opening pressure.

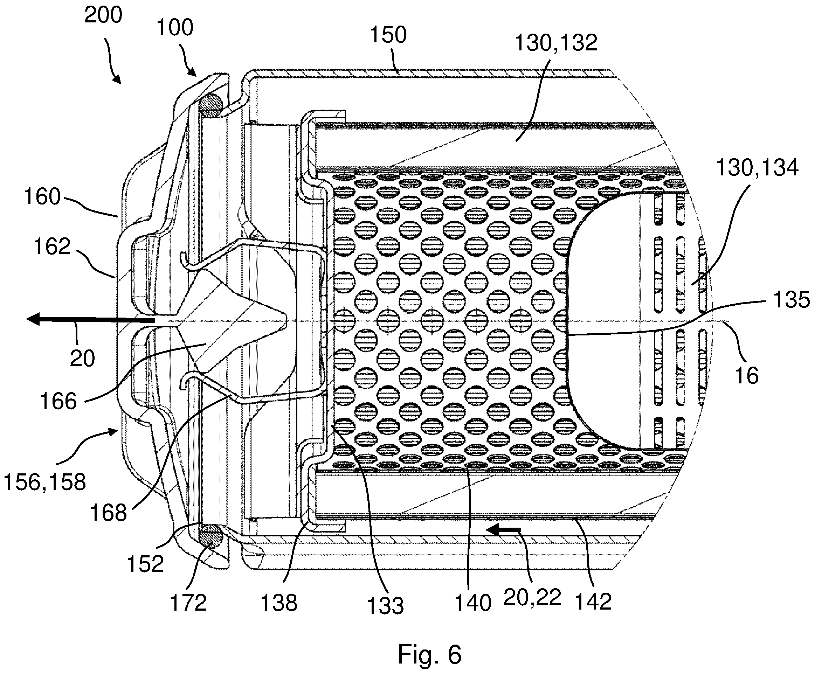

In Fig. 6 the detail Y2 of the filter device 200 according to Fig. 3 is shown.

The cross section depicts the different layers of the filter arrangement 130 with the particle separator 134 being the innermost layer. The particle separator 134 with its closed end 135 is mounted inside the central tube 140 which supports the filter element 132 from an inner side. The particle separator 134 is configured with a separation screen with screen openings.

The filter element 132, configured as a pleated filter medium, is supported on its outside by the support contour 142. The filter element 132 is sealed by a tight end cap 138 as a closed end 133.

The pressure relief valve 160 comprises a deflectable cap 162, which is arranged at the fluid outlet 152 by a fixation element 166 interacting with a fixation counter element 168 of the fluid outlet 152. The fixation counter element 168 may be configured as a clamping element that may be connected directly to the top section 150 of the cover element 100 at the fluid outlet 152. Alternatively, the fixation counter element 168 could be connected to the end cap 138 of the filter element 132.

The deflectable cap 162 is sealed against the fluid outlet by a circumferential sealing element 172. The deflectable cap 162 is detachable from the fluid outlet 152 when the predetermined excess pressure in the housing 60 is reached or exceeded.

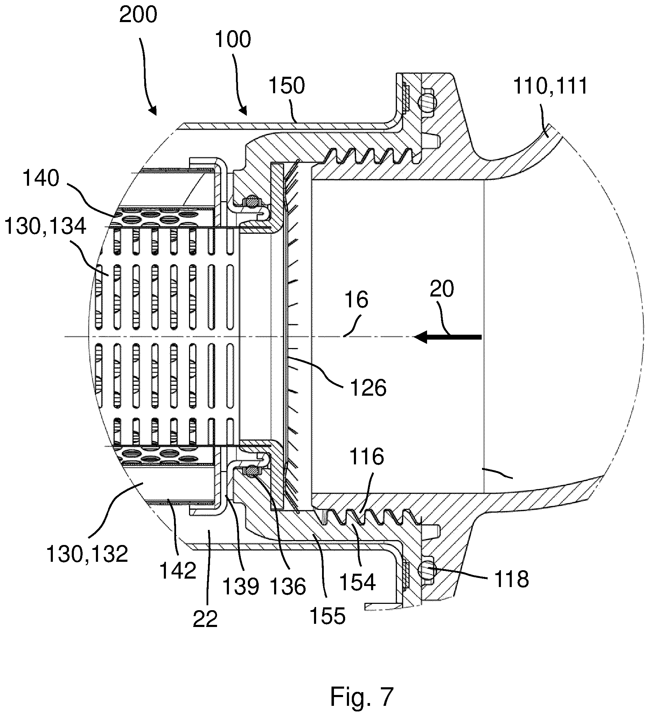

In Fig. 7 the detail X2 of the filter device 200 according to Fig. 3 is shown.

The top section 150 of the cover element 100 comprises a flange 155 for connecting the base section 110. For this purpose the flange 155 is equipped with a thread 154 which interacts with a corresponding thread 116 of the base section 110. For an axial sealed connection a circumferential sealing element 118 is foreseen between the flange 155 and the base section 110.

The filter element 132 comprises a second end cap 139 at the upstream end of the filter element 132 which may be mounted to the flange 155 and is sealed radially against the flange 155 with a circumferential sealing element 136.

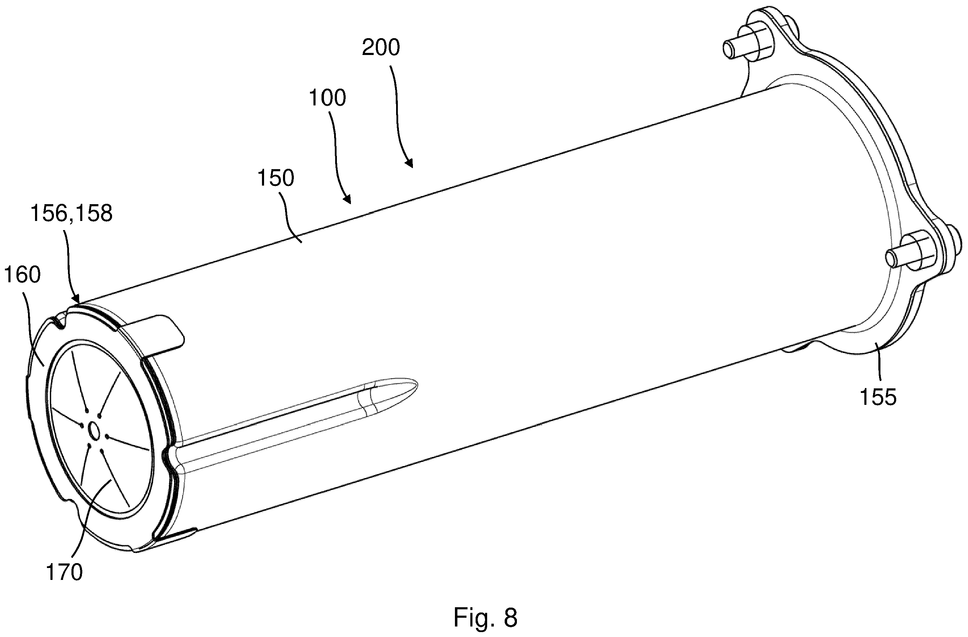

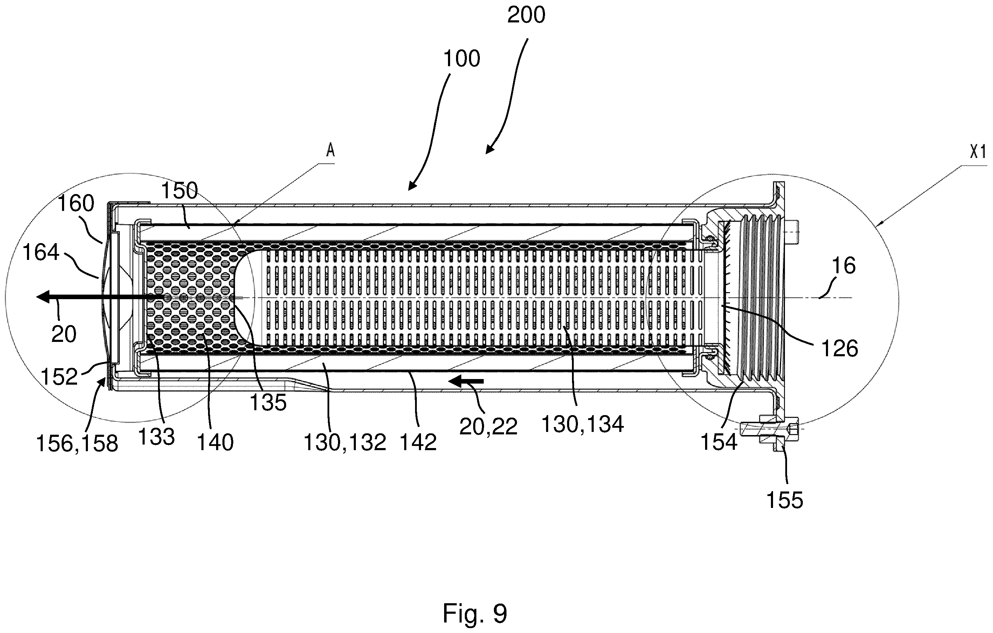

Fig. 8 depicts a filter device 200 according to further embodiments, in an isometric view. Fig. 9 depicts a sectional view of the filter device 200 according to Fig. 8 with details A and X1 of the filter device 200 indicated.

Only the top section 150 of the cover element 100 of the filter device 200 is depicted, as the base section 110 might be the same base section 110 as in the previous embodiment.

Advantageously, the top section 150 can be replaced as a self-contained unit after an event in which a tight closed end 156 of the top section 150 is opened while the existing base section 110 can still be used.

In contrast to the previous embodiment, the pressure relief valve 160 comprises a burst disc 164, which opens the fluid path 22 when the predetermined excess pressure in the housing 60 is reached or exceeded. The filter arrangement 130 corresponds to the filter arrangement 130 depicted in Figs. 1 to 7.

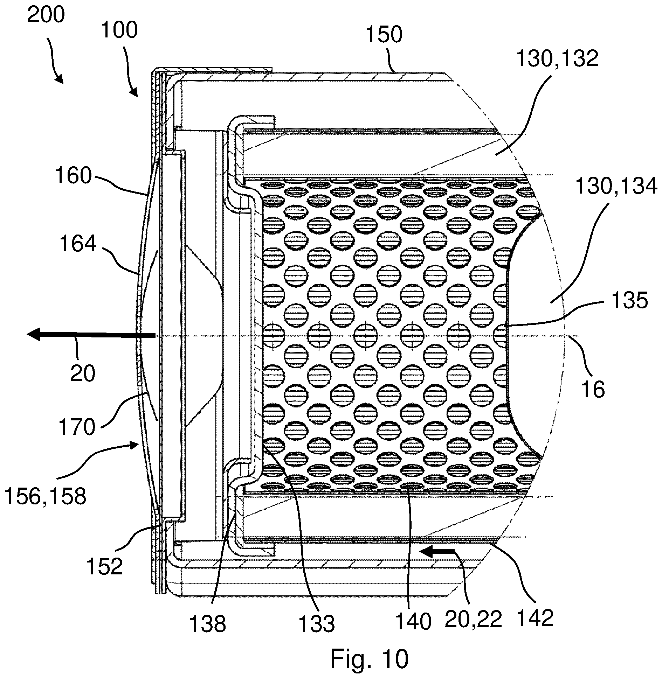

In Fig. 10 the detail A of the filter device 200 according to Fig. 9 is depicted.

The burst disc 164 is arranged at the top section 150 as the tight closed end 156. For opening by a fluid pressure the burst disc 164 is configured with a number of radial breaking point lines 170. In case of reaching or exceeding the predetermined excess pressure in the housing 60 the breaking point lines 170 may rupture, thus opening the fluid passage 22 in the fluid flow direction 20.

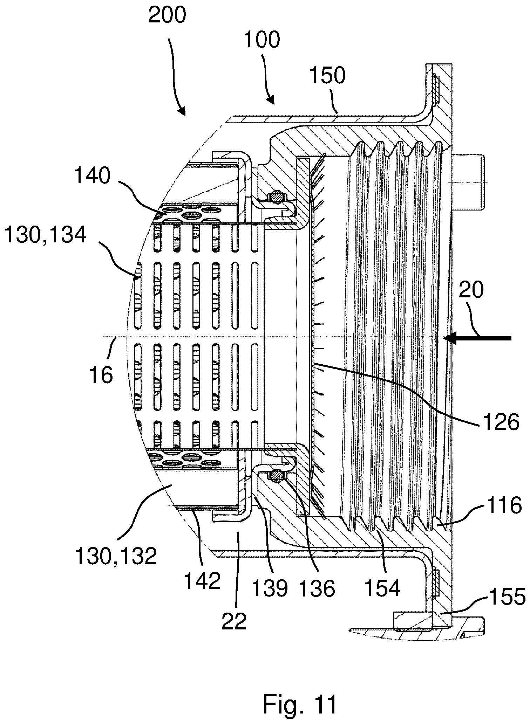

In Fig. 11 the detail X1 of the filter device according to Fig. 9 is depicted.

The upstream end of the top section 150 is configured in the same way with a flange 155 for connection to a base section 110 as in the previous embodiment. The filter element 132 has a same end cap 139 and is sealed in the same way against the flange 155.

### Reference Signs List

- 16: axial direction
- 18: mounting element
- 20: fluid flow direction
- 22: fluid passage
- 30: bypass fluid flow path
- 60: battery housing
- 62: first opening
- 64: interior
- 66: environment
- 68: outside
- 70: second opening
- 72: third opening
- 74: wall
- 76: fixation element
- 80: overpressure valve
- 90: pressure compensation element
- 92: spring element
- 94: membrane
- 96: body
- 100: cover element
- 110: base section
- 111: fluid guiding component
- 112: open end of the base section
- 114: free end of base section
- 116: thread
- 118: sealing element
- 120: sealing element
- 122: seat
- 124: rim
- 126: fluid inlet
- 130: filter arrangement
- 132: filter element
- 133: closed end
- 134: particle separator
- 135: closed end
- 136: sealing element
- 138: end cap
- 139: end cap
- 140: central tube
- 142: support contour
- 150: top section
- 152: fluid outlet
- 154: thread
- 155: flange
- 156: closed end of the top section
- 158: free end of the top section
- 160: pressure relief valve
- 162: cap
- 164: burst disc
- 166: fixation element
- 168: fixation counter element
- 170: breaking point lines
- 172: sealing element
- 200: filter device

## Claims

1. A filter device (200) for filtering a fluid stream of a housing (60) of a battery, in particular of a traction battery of a motor vehicle, the filter device (200) comprising:
a cover element (100) comprising a base section (110) and a top section (150), that comprise a fluid passage (22) for venting, the cover element (100) further comprising an open end (112) at a free end (114) of the base section (110) and a closed end (156) at a free end (158) of the top section (150), and the base section (110) being connected to the top section (150);
a filter arrangement (130) arranged inside the cover element (100), in particular inside the top section (150); and
a pressure relief valve (160) arranged in an intended fluid flow direction (20) downstream of the filter arrangement (130),
wherein the filter arrangement (130) comprises a filter element (132) and a particle separator (134) that are hollow, in particular round, the particle separator (134) being arranged upstream of the filter element (132) in the intended fluid flow direction (20).

2. The filter device (200) according to claim 1, wherein the filter element (132) and the particle separator (134) are shaped as hollow cylinders respectively comprising closed downstream ends (133, 135),
wherein the particle separator (134) is arranged inside the filter element (132), the closed downstream ends (133, 135) being directed to the closed end (156) of the top section (150), and
wherein the filter element (132) comprises a gas tight end cap (138) at the closed end (133).

3. The filter device (200) according to claim 1 or 2, wherein the top section (150) comprises a fluid inlet (126) in an axial direction (16), and
wherein the particle separator (134) is arranged across the fluid inlet (126) and through the top section (150).

4. The filter device (200) according to any one of preceding claims, wherein the base section (110) is a fluid guiding component (111) configured to lead the fluid stream from the housing (60) to the top section (150), and
wherein the base section (110) comprises a bending contour providing a fluid deflection angle.

5. The filter device (200) according to any one of preceding claims, wherein the top section (150) comprises a fluid outlet (152), and
wherein the pressure relief valve (160) is mounted at the fluid outlet (152) and is configured to open the fluid passage (22) in the intended fluid flow direction (20) when a predetermined excess pressure in the housing (60) is reached or exceeded.

6. The filter device (200) according to claim 5, wherein the pressure relief valve (160) comprises a spring as an actuator, the spring being configured to open the fluid passage (22) when the predetermined excess pressure in the housing (60) is reached or exceeded.

7. The filter device (200) according to claim 5, wherein the pressure relief valve (160) comprises a deflectable cap (162) comprising a fixation element (166) interacting with a fixation counter element (168) of the fluid outlet (152) so that the deflectable cap (162) is arranged at the fluid outlet (152), and
wherein the deflectable cap (162) is detachable from the fluid outlet (152) when the predetermined excess pressure in the housing (60) is reached or exceeded.

8. The filter device (200) according to claim 5, wherein the pressure relief valve (160) comprises a burst disc (164) configured to open the fluid passage (22) when the predetermined excess pressure in the housing (60) is reached or exceeded.

9. The filter device (200) according to any one of preceding claims, wherein the filter arrangement (130) further comprises:
a central tube (140) arranged inside the filter element (132) and between the particle separator (134) and the filter element (132); and
a support contour (142) arranged on an outside of the filter element (132).

10. The filter device (200) according to any one of preceding claims, wherein the base section (110) comprises a circumferential rim (124) that is a seat (122) for a sealing element (120) to be arranged circumferentially between the circumferential rim (124) and the housing (60) in an intended mounting state of the filter device (200).

11. The filter device (200) according to any one of preceding claims, wherein the top section (150) is replaceable as a self-contained unit after an event in which the closed end (156) is opened while the base section (110) is useable.

12. A housing (60) of a battery, in particular of a traction battery of a motor vehicle, the housing (60) comprising:
the filter device (200) according to any one of preceding claims; and
at least one first opening (62),
wherein the open end (112) of the cover element (100) of the filter device (200) is mounted in a substantially fluid tight manner to the at least one first opening (62).

13. The housing (60) according to claim 12, wherein a base section (110) of the cover element (100) is attached to an outside (68) of the housing (60), and
wherein the top section (150) of the cover element (100) is arranged parallel to a wall (74) of the housing (60).

14. The housing (60) according to claim 12 or 13, further comprising a second opening (70),
wherein an overpressure valve (80) is arranged at the second opening (70) and is configured to open at a higher pressure level than the pressure relief valve (160) of the cover element (100) to provide a bypass fluid flow path (30) from an interior (64) of the housing (60) to an environment (66), the bypass fluid flow path (30) bypassing at least the filter arrangement (130).

15. The housing (60) according to any one of claims 12 to 14, further comprising at least one third opening (72),
wherein a pressure compensation element (90) is arranged at the at least one third opening (72).
